# FASCICULE DE BREVET EUROPEEN

(11) **EP 3 164 248 B1**
(45) Date de publication et mention de la délivrance du brevet: **11.04.2018**
(21) Numéro de dépôt: 15734642.0
(22) Date de dépôt: 01.07.2015
(51) Int. Cl.: B25J 21/02, G01B 3/00

(54) **DISPOSITIF DE POSITIONNEMENT DE RONDS DE GANTS SUR UNE ENCEINTE DE TYPE BOÎTE À GANTS**
VORRICHTUNG ZUR POSITIONIERUNG VON HANDSCHUHEINGRIFFEN BEI EINER HANDSCHUHFACHKAMMER
DEVICE FOR POSITIONING GLOVE PORTS ON A GLOVEBOX-TYPE CHAMBER

(30) Priorité: 03.07.2014 FR 1456391
(43) Date de publication de la demande: 10.05.2017
(73) Titulaire: Commissariat à l'Énergie Atomique et aux Énergies Alternatives, 75015 Paris (FR)
(72) Inventeur: PARRENIN, Cédric, F-21120 Til-Chatel (FR)
(74) Mandataire: Brevalex
(86) Numéro de dépôt international: PCT/EP2015/064992
(87) Numéro de publication internationale: WO 2016/001309

(56) Documents cités:
- DE-A1-102007 021 169
- JP-A- 2011 149 705

## Description

### DOMAINE TECHNIQUE

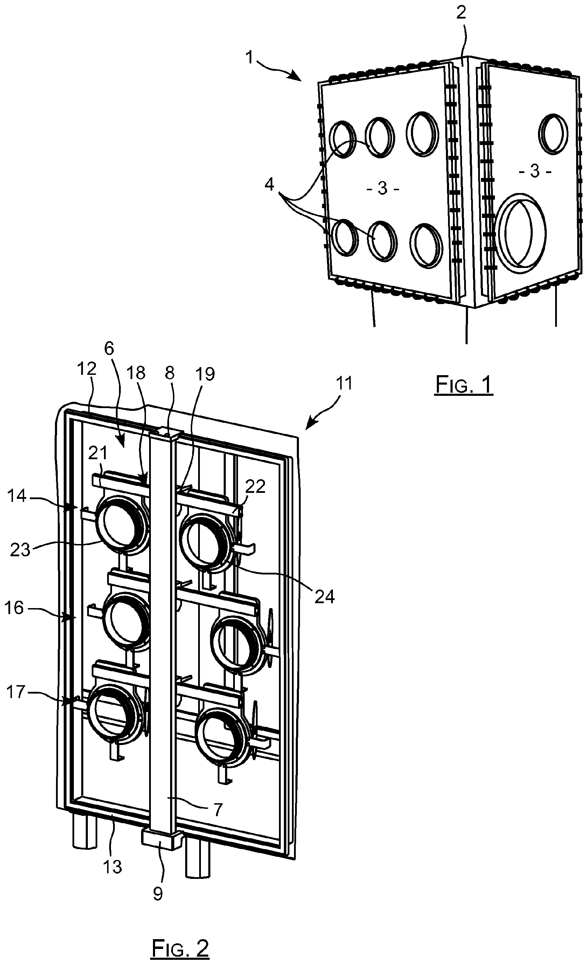

L'invention concerne la fabrication d'une enceinte de type boîte à gants, telle que représentée schématiquement en figure 1, utilisée notamment pour la manipulation de matière radioactive. Une telle boîte 1 comprend une structure ou carcasse 2 portant des panneaux transparents 3 pourvus d'ouvertures recevant des ronds de gants 4 dans lesquels sont montés des gants. L'invention concerne le repérage des positions des ronds de gants 4 pour réaliser les ouvertures aux bons emplacements dans les panneaux d'une telle boîte à gant.

### ÉTAT DE LA TECHNIQUE ANTÉRIEURE

En pratique, la position des ronds de gants sur un panneau conditionne l'accessibilité à l'espace interne de l'enceinte.

Une solution consiste à évaluer approximativement les positions de ces ouvertures avant de les réaliser, en espérant qu'elles permettront à l'opérateur d'accéder à l'ensemble du volume interne de l'enceinte. Comme les formes de boîte à gants changent d'une boîte à une autre, cette solution peut conduire à placer les ronds de gants à des positions ne permettant pas au manipulateur d'accéder à tout le volume interne lorsque ses bras sont engagés dans les ronds de gants.

Il est alors nécessaire de fabriquer à nouveau le panneau avec des emplacements mieux définis, ce qui est pénalisant compte tenu du coût élevé de tels panneaux, qui sont fabriqués en plexiglass chargé de plomb et dont le temps d'approvisionnement est généralement long. Le document JP 2011149705 A présente une boîte à gants dans lequel un tel panneau muni de ronds gants peut être changé, lorsque les positions des ouvertures pour les ronds de gants ne sont pas bien adaptées à l'opération envisagée.

Une autre solution consiste à réaliser un maquettage pour fixer à même la structure dépourvue de panneaux les ronds de gants aux emplacements prévus, et à vérifier que ces emplacements permettent d'accéder à la totalité de l'espace interne. La maquette peut alors être modifiée pour corriger les emplacements jusqu'à permettre à l'opérateur d'accéder à la totalité de l'espace interne avec ses bras engagés dans les ronds de gants.

En pratique, le maquettage est réalisé avec des cornières ou autres profilés, de sorte qu'il est fastidieux et complexe à mettre en oeuvre. Cette complexité est encore accrue lorsqu'il s'agit de placer plusieurs ronds de gants sur le maquettage.

D'un autre côté, des dispositifs permettant d'identifier la position de trous ou ouvertures dans une pièce à fabriquer existent dans différents domaines techniques, autres que le domaine des boîtes à gants. Le document DE 10 2007 021 169 A1 montre par exemple un dispositif utilisé dans l'industrie du bois, dans laquelle il est nécessaire de réaliser des mortaises ou autres types de trous dans une planche ou une poutre. Toutefois, un tel dispositif ne pourrait pas être fixé sur la structure d'une boîte à gant et est donc tout à fait inadapté à la conception de panneaux pour une telle boîte à gants.

### EXPOSÉ DE L'INVENTION

L'invention concerne un dispositif d'identification de position d'au moins un rond de gant devant équiper un panneau porté par une structure de boîte à gants délimitant une enceinte fermée, ce dispositif comprenant une embase, des moyens de fixation de cette embase à la structure de la boîte à gants, au moins un gabarit comprenant une ouverture apte à recevoir un rond de gant, chaque gabarit étant porté par l'embase tout en étant déplaçable par rapport à cette embase, et des moyens de blocage en position de chaque gabarit par rapport à l'embase.

L'invention permet ainsi de réduire très significativement le temps nécessaire pour déterminer les positions des ronds de gants. Lorsque le panneau concerné est retiré le dispositif est fixé à la structure, à l'emplacement de ce panneau : l'opérateur peut passer ses mains à travers les ronds de gants afin de se déterminer si les positions de ces ronds de gants sont adaptées ou pas. Si nécessaire, l'opérateur débloque les éléments pour replacer un ou plusieurs ronds de gants à sa convenance avant de les bloquer dans leur nouvelle position afin de réaliser un nouvel essai. Par essais successifs, l'opérateur parvient ainsi à identifier la configuration optimale.

L'invention concerne également un dispositif ainsi défini, comprenant un montant principal portant une embase, ce montant principal étant pourvu à ses extrémités de moyens de fixation à deux traverses de la structure de boîte à gants devant recevoir le panneau.

L'invention concerne également un dispositif ainsi défini, dans lequel l'embase est montée coulissante sur ce montant principal, et comprenant des moyens de blocage de l'embase par rapport au montant principal.

L'invention concerne également un dispositif ainsi défini, dans lequel chaque gabarit est porté par l'embase en étant mobile par rapport à cette embase perpendiculairement au montant principal, et comprenant des moyens de blocage de chaque gabarit par rapport à l'embase.

L'invention concerne également un dispositif ainsi défini, comprenant un système de graduations le long du montant principal et sur chaque moyen de fixation du gabarit à une embase, pour repérer la position de chaque gabarit par lecture visuelle.

### BRÈVE DESCRIPTION DES DESSINS

La figure 1, déjà décrite, est une vue d'ensemble d'une boîte à gants ;
La figure 2 est une vue en perspective du dispositif selon l'invention en place sur une structure de boîte à gants ;
La figure 3 est une vue d'ensemble en perspective d'une structure de boîte à gants équipée du dispositif selon l'invention avec un opérateur réalisant une simulation.

### EXPOSÉ DÉTAILLÉ DE MODES DE RÉALISATION PARTICULIERS

L'idée à la base de l'invention est un dispositif portant un ou plusieurs ronds de gant dont les positions sont ajustables, qui est destiné à être monté sur une structure de boîte à gant dépourvue de panneau. Un opérateur peut ainsi réaliser des essais lui permettant de manière simple de déterminer les positions de ronds de gants les mieux adaptées à la tâche devant être effectuée dans la boîte, et les mieux adaptées pour accéder à l'ensemble de l'espace interne de l'enceinte.

Le dispositif qui est représenté schématiquement dans la figure 2, où il est repéré par 6, comporte un montant principal 7 sous forme d'un profilé formant glissière équipé à l'une de ses extrémités d'une patte d'accrochage fixe 8 et à son autre extrémité d'une patte d'accrochage ajustable 9. La patte fixe 8 est rigidement solidaire de l'extrémité du montant 7 alors que la patte ajustable 9 est apte à coulisser le long de ce montant.

En service, le montant principal 7 s'étend verticalement en ayant sa patte fixe 8 accrochée à une traverse horizontale supérieure 12 de la structure de la boîte à gants 11, et sa patte mobile accrochée à une traverse horizontale inférieure 13 de la structure de cette boîte 11. Ces traverses 12 et 13 correspondent aux bords supérieur et inférieur d'une ouverture de la structure qui est destinée à recevoir un panneau lorsque la boîte est finie.

Ce montant principal 7 porte plusieurs ensembles 14, 16, 17 identiques incluant chacun deux gabarits d'ouvertures aptes à recevoir chacun un rond de gant et éventuellement un gant.

Comme visible sur la figure 2, l'ensemble 14 comporte une traverse 18 formant glissière qui dépasse de part et d'autre du montant 7 en s'étendant perpendiculairement à celui-ci, c'est-à-dire horizontalement en position de service.

Cette traverse 18 formant glissière est portée par une attache verrouillable 19 qui est montée coulissante sur le montant 7 formant glissière et qui est blocable en position sur ce montant 7, pour ajuster verticalement la position de l'ensemble 14 à toute hauteur souhaitée.

La traverse 18 formant glissière est elle-même mobile transversalement dans l'attache 19 et blocable en position dans celle-ci, ce qui permet d'ajuster transversalement la position de cette traverse 18 en la décalant plus ou moins vers la gauche ou vers la droite par rapport au montant 7.

La traverse 18 comporte ainsi une première portion 21 dépassant d'un côté du montant 7 et une seconde portion 22 dépassant de l'autre côté du montant 7. La première portion 21 porte un premier gabarit 23 et la seconde portion porte un second gabarit 24. Chaque gabarit 23, 24 est monté coulissant sur la traverse 18 formant glissière et il peut être bloqué à une position donnée le long de cette traverse.

Comme visible sur la figure 2, le gabarit 23 comporte une plaque comprenant une région supérieure équipée de moyens d'emboîtement et de blocage dans la traverse 18 formant glissière, et une région inférieure comprenant une ouverture sur laquelle est monté un rond de gant. Le gabarit 24 est identique au gabarit 23.

Le gabarit 23 et le gabarit 24 sont ainsi ajustables en position sur la traverse 18 et blocables en position le long de cette traverse.

L'attache 19 comporte une embase ayant une partie qui s'engage dans le montant 17 et qui est équipée d'une vis de blocage permettant son immobilisation le long du montant 7 par serrage de cette vis, et une autre partie dans laquelle s'engage la traverse 18 avec une autre vis de blocage pour bloquer en position cette traverse.

De manière analogue, la partie haute de chaque gabarit est équipée d'une embase s'engageant dans ou autour de la traverse 18 pour coulisser le long de celle-ci et elle est pourvue d'une vis de serrage permettant le blocage du gabarit en position le long de cette traverse 18.

Ainsi, les deux gabarits 23 et 24 sont situés à une même hauteur qui est ajustable grâce à l'attache mobile 18, et les positions latérales de ces deux gabarits sont ajustables en déplacement latéralement la traverse 18 par rapport à l'embase 19 qui la porte, et/ou en déplaçant latéralement chaque gabarit par rapport à cette traverse et en serrant les différentes vis de blocage pour figer la transversale position de ces gabarits.

Dans la configuration de la figure 2, l'ensemble 14 est situé en partie haute du montant 7, et les deux autres ensembles, à savoir les ensembles 16 et 17 qui sont identiques à l'ensemble 14 sont situés au-dessous de l'ensemble 14 le long du montant 7.

En service, l'opérateur commence par installer le montant 7 en le suspendant à la traverse supérieure 12 au moyen de l'attache fixe 8, et en fixant sa région inférieure à la traverse inférieure 13 au moyen de l'attache mobile 9.

Une fois que le dispositif est ainsi installé, l'opérateur ajuste la hauteur de chaque ensemble 14, 16 et 17 le long du montant 7, et il serre les vis de blocage correspondantes. L'opérateur peut ensuite ajuster latéralement les positions de chacun des deux gabarit de chaque ensemble avant de serrer les vis de blocage correspondantes.

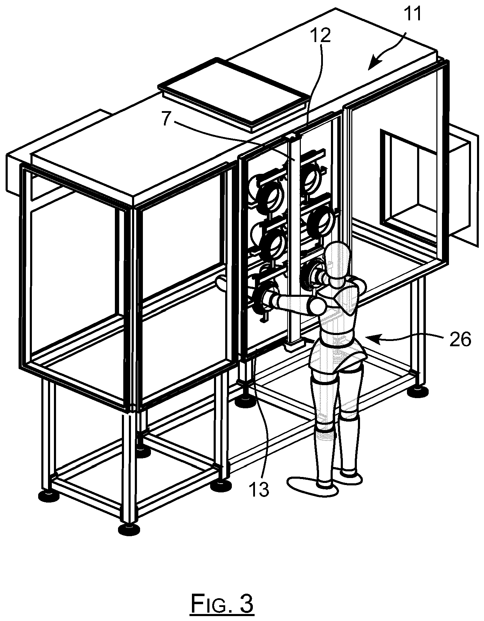

Lorsque ce prépositionnement a été réalisé, l'opérateur qui est repéré par 26 sur la figure 3 peut réaliser des essais. Il passe alors ses bras dans les différents ronds de gants pour vérifier qu'il peut accéder aux différentes régions internes de la boîte, et qu'il peut effectuer en éprouvant une gêne minimale la tache devant être accomplie dans cette boîte. Le cas échéant, l'opérateur réajuste les positions de chaque rond de gant du dispositif jusqu'à obtenir des réglages de position optimaux.

Lorsque l'opérateur considère que les ronds de gants portés par les gabarits sont immobilisés aux positions optimales, il peut noter ces positions après les avoir mesurées. Ces mesures peuvent être réalisées manuellement avec un mètre, ou simplement en lisant des graduations prévues à cet effet sur le montant principal 7 et sur les traverses permettant d'identifier la position de chaque rond de gant. Une autre possibilité peut consister à utiliser un système de mesure laser pour identifier les positions de chaque rond de gant.

Les données de position ainsi recueillies sont ensuite reportées sur le panneau devant être installé dans l'ouverture de boîte délimitée par les traverses 12 et 13, avant de passer à l'opération de découpe de ces ouvertures dans le panneau.

L'invention permet ainsi de déterminer de manière précise la position de chaque rond de gant en réalisant des essais réels de l'ergonomie des manipulations à réaliser. A ce titre, il est possible d'équiper chaque rond de gant d'un gant pour rendre les essais encore plus réalistes. L'invention permet encore de mesurer précisément les positions identifiées.

L'invention qui a été présentée pour le contexte de la manipulation de matières radioactives s'applique aussi à d'autres domaines comme par exemple la chimie, la biologie et la bactériologie. Elle peut aussi s'appliquer au milieu hospitalier pour le cas des couveuses, et dans le domaine des travaux sur virus. L'invention s'applique encore au domaine des enceintes mobiles à montage rapide sur des théâtres d'opérations civil ou militaire.

## Revendications

1. Dispositif d'identification de position d'au moins un rond de gant devant équiper un panneau porté par une structure de boîte à gants (11) délimitant une enceinte fermée, ce dispositif comprenant une embase (19), des moyens de fixation de cette embase (19) à la structure de la boîte à gants (11), au moins un gabarit (22, 23) comprenant une ouverture apte à recevoir un rond de gant, chaque gabarit étant porté par l'embase (19) tout en étant déplaçable par rapport à cette embase (19), et des moyens de blocage en position de chaque gabarit (22, 23) par rapport à l'embase (19).

2. Dispositif selon la revendication 1, comprenant un montant principal (7) portant une embase (19), ce montant principal (7) étant pourvu à ses extrémités de moyens de fixation à deux traverses (12, 13) de la structure de boîte à gants (11) devant recevoir le panneau.

3. Dispositif selon la revendication 2, dans lequel l'embase (19) est montée coulissante sur ce montant principal (7), et comprenant des moyens de blocage de l'embase (19) par rapport au montant principal (7).

4. Dispositif selon la revendication 3, dans lequel chaque gabarit est porté par l'embase (19) en étant mobile par rapport à cette embase (19) perpendiculairement au montant principal (7), et comprenant des moyens de blocage de chaque gabarit par rapport à l'embase (19).

5. Dispositif selon la revendication 4, comprenant un système de graduations le long du montant principal (7) et sur chaque moyen de fixation du gabarit à une embase (19), pour repérer la position de chaque gabarit par lecture visuelle.

## Patentansprüche

1. Vorrichtung zum Identifizieren der Position zumindest eines Handschuheingriffs, mit einem eine von einem Handschuhkastenaufbau (11) getragene Platte ausgestattet werden soll, die einen geschlossenen Raum eingrenzt, wobei diese Vorrichtung eine Basis (19), Einrichtungen zum Befestigen dieser Basis (19) an den Handschuhkastenaufbau (11), zumindest eine Schablone (22, 23) mit einer Öffnung, die dazu geeignet ist, einen Handschuheingriff aufzunehmen, wobei jede Schablone von der Basis (19) getragen wird und dabei bezüglich dieser Basis (19) verlagerbar ist, und Einrichtungen zur Positionssicherung einer jeden Schablone (22, 23) bezüglich der Basis (19) enthält.

2. Vorrichtung nach Anspruch 1, enthaltend ein Hauptständer (7), der eine Basis (19) trägt, wobei dieser Hauptständer (7) an seinen Enden mit Einrichtungen zum Befestigen an zwei Querträger (12, 13) des Handschuhkastenaufbaus (11) versehen ist, welche die Platte aufnehmen sollen.

3. Vorrichtung nach Anspruch 2, wobei die Basis (19) gleitbeweglich an diesem Hauptständer (7) gelagert ist und Einrichtungen zum Sichern der Basis (19) bezüglich des Hauptständers (7) aufweist.

4. Vorrichtung nach Anspruch 3, wobei jede Schablone von der Basis (19) getragen wird und dabei bezüglich dieser Basis (19) senkrecht zum Hauptständer (7) beweglich ist, und wobei sie Einrichtungen zum Sichern jeder Schablone bezüglich der Basis (19) aufweist.

5. Vorrichtung nach Anspruch 4, enthaltend ein Abstufungssystem entlang des Hauptständers (7) und an jeder Einrichtung zum Befestigen der Schablone an eine Basis (19), um die Position einer jeden Schablone durch visuelles Ablesen zu erkennen.

## Claims

1. A device for identifying a position of at least one glove port intended to equip a panel carried by a glovebox structure (11) delimiting a closed chamber, this device comprising a base (19), means for attaching this base (19) to the glovebox structure (11), at least one template (22, 23) comprising an opening able to receive a glove port, each template being carried by the base (19) while being movable with respect to this base (19), and means for locking each template (22, 23) in position with respect to the base (19).

2. The device according to claim 1, comprising a main post (7) carrying a base (19), this main post (7) being provided at the ends thereof with means for attaching to two cross members (12, 13) of the glovebox structure (11) intended to receive the panel.

3. The device according to claim 2, wherein the base (19) is slidably mounted on this main post (7), and comprising means for locking the base (19) with respect to the main post (7).

4. The device according to claim 3, wherein each template is carried by the base (19) while being movable with respect to this base (19) perpendicularly to the main post (7), and comprising means for locking each template with respect to the base (19).

5. The device according to claim 4, comprising a system of graduation marks along the main post (7) and on each means for attaching the template to a base (19), to locate the position of each template by visual reading.
